(19) **Europäisches Patentamt**

**European Patent Office**

**Office européen des brevets**

(11) **EP 0 986 128 A1**

(12) **EUROPEAN PATENT APPLICATION**

(43) Date of publication:
**15.03.2000 Bulletin 2000/11**

(51) Int. Cl.7: **H01Q 1/00**

(21) Application number: **99117352.7**

(22) Date of filing: **03.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.09.1998 KR 9836792**

(71) Applicant: **MEDISON CO., LTD.
Kangwon-do 250-870 (KR)**

(72) Inventors:
• **Ahn, Young-Bok,
Elec., Inf., Comm., Eng., Dept.
Kwangjin-gu, Seoul 143-140 (KR)**
• **Oh, Jin-Sick
Seoul 140-170 (KR)**
• **Song, Tai-Kyong
Sosa-gu, Puchun-city, Kyunggi-do 422-230 (KR)**

(74) Representative:
**Sama, Daniele, Dr. et al
Sama Patents,
Via G.B. Morgagni, 2
20129 Milano (IT)**

(54) **Method for forming a spherical wave by superposition of a plurality of limited plane waves**

(57)     A spherical wave formation method by superposition of a plurality of limited plane waves is provided, in which a plurality of sufficiently small elements in a linear transducer transmits a spherical wave according to a predetermined delay pattern to thereby form a plurality of limited plane waves, and then the plurality of the limited plane waves are superposed, to thereby form a large-sized spherical wave.

**EP 0 986 128 A1**

**Description**

## BACKGROUND OF THE INVENTION

Field of the Invention

The present invention relates to a method for forming a large-sized spherical wave in which a plurality of limited plane waves are formed by waves transmitted from a respective one of a plurality of elements in a linear transducer based on a predetermined delay pattern and the plurality of the formed limited plane waves are superposed.

Description of the Prior Art

A linear transducer is comprised of a plurality of elements, which transmit waves to a certain object and receive waves reflected from the object. In the case that height of each element is much larger than its width, the shape of the wave transmitted from each element is not nearly varied in the direction of its height. Thus, the travelling direction of the wave transmitted from the element is considered on the two-dimensional plane. In addition, the shape of the transmitted wave is varied according to the width of the element, in which case if the width of the element is very small the transmitted wave has a shape close to a spherical wave.

There are a dynamic focusing and a synthetic focusing in the focusing types for transmitting/receiving waves. In the case of the dynamic focusing, a transmit focusing is performed by applying a delay time to a respective one of elements and then transmitting a respective wave, and a receive focusing is performed by receiving the reflected wave and compensating for the applied delay time. Meanwhile, in the case of the synthetic focusing, a respective individual element transmits and receives a wave, to thereby perform a focusing on a memory in a linear transducer.

However, since the wave transmitted from each element is small in size in the case of the synthetic focusing, it does not travel up to a remote distance, for this reason a ratio of signal to noise is not good.

## SUMMARY OF THE INVENTION

To solve the above problems, it is an object of the present invention to provide a method for forming a large-sized spherical wave by using spherical waves transmitted from a plurality of elements based on a predetermined delay pattern.

To accomplish the object according to the present invention, there is provided a method for forming a large-sized spherical wave by using waves transmitted from a linear transducer, the spherical wave forming method comprising the steps of: (a) transmitting waves having a respective time delay from a plurality of elements in the linear transducer, based on a predetermined delay pattern; (b) forming a plurality of limited plane waves by using the plurality of waves having the respective time delay transmitted in step (a); and (c) superposing the plurality of limited plane waves formed in step (b) in order to form the large-sized spherical wave.

## BRIEF DESCRIPTION OF THE DRAWINGS

The object and other advantages of the present invention will become more apparent by describing in detail the structures and operations of the present invention with reference to the accompanying drawing, in which:

FIG. 1 is a graphical view for explaining formation of limited plane waves;
FIG. 2 is a graphical view for explaining formation a spherical wave by superposition of a plurality of limited plane waves; and
FIG. 3 is a graphical view showing position of a virtual linear transducer.

## DETAILED DESCRIPTION OF THE PREFERRED EMBODIMENTS

A preferred embodiment of the present invention will be described with reference to the accompanying drawings.

The present invention considers a spherical wave on a two-dimensional plane in the case that height of a respective element in a linear transducer is much larger than its width.

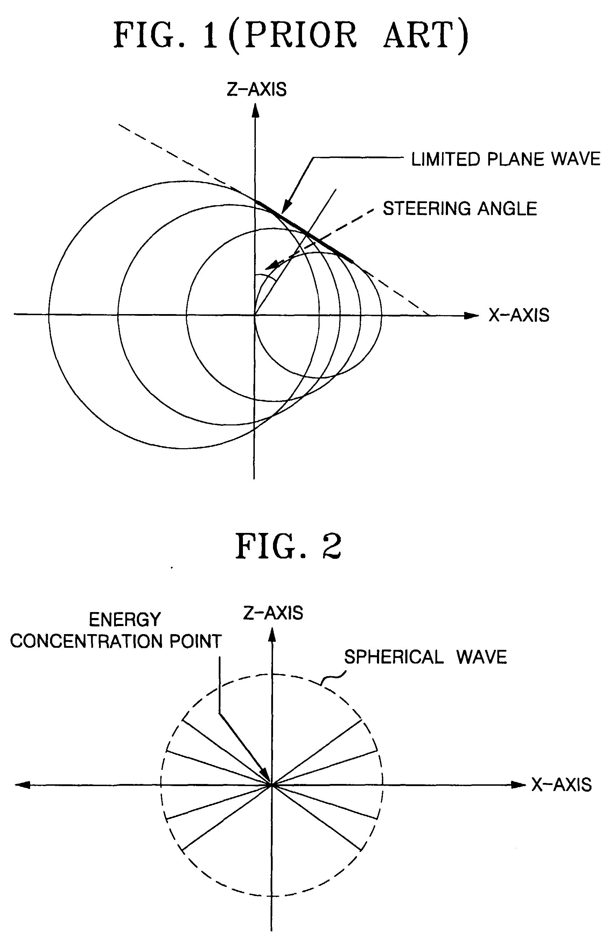

FIG. 1 is a graphical view for explaining formation of limited plane waves. In FIG. 1, the x-axis represents a direction where respective elements in a linear transducer are arrayed. Also, a respective circle denotes a spherical wave transmitted from each element. Here, a shape of the pulse with respect to the spherical wave follows a Gaussian distribution, and the spherical wave P(t) is expressed as the following equation (1).

$$P(t) = \exp(-(\omega_0 t/\sigma)^2) \bullet \exp(-j\omega_0 t) \tag{1}$$

Here, $\omega_0$ denotes a center frequency, $\sigma$ (=2.5 $\pi$) denotes the width of a pulse, and t denotes time.

Also, the directivity $A(\theta)$ of each element is expressed as the following equation (2).

$$A(\theta) = A_0 \frac{\sin(\frac{kw}{2}\sin\theta)}{\frac{kw}{2}\sin\theta} \cos\theta \tag{2}$$

Here, $A_0$ represents the initial state when $\theta$ is equal to 0, k is a wave number, w is the width of an element, and $\theta$ is an angle where a spherical wave travels in each element. A fall-off which means that a spherical wave is spread and weakened while it travels, is inversely proportional to a square root of a distance "r" at which the spherical wave from the linear transducer travels to a certain object and back. Also, the fall-off is expressed as the following equation (3).

$$Fall_{off} = \frac{1}{\sqrt{r}} \tag{3}$$

After the spherical wave has been transmitted from each element in the linear transducer, a plane wave is formed with respect to the same phase of the transmitted spherical wave. The plane wave has a limited length. Here, the plane wave having a limited length is called a limited plane wave, which is shown in FIG. 1.

The limited plane wave is expressed as the following equation (4) according to the Fresnel approximation equation in the polar coordinate system.

$$L^{\varphi}{}_{fresnel}(r,\theta) = L^{\varphi}{}_{fraun}(\theta) * \cos(\frac{-r}{2k\cos^2\theta} u^2) \tag{4}$$

Here, $L^{\varphi}{}_{fraun}(\theta)$ represents the Fraunhofer approximation equation in the polar coordinate system, k is equal to $2\pi/\lambda$, u is equal to $\sin\theta/\lambda$, $\varphi$ is a steering angle of the limited plane wave. The limited plane wave in the equation (4) is expressed in the convolutional form between the wave in the Fraunhofer area and the cosine term.

Also, when a plurality of limited plane waves which have been formed as described above are superposed in a close distance, the superposed wave is expressed as the following equation (5).

$$\sum_{n=-\infty}^{\infty} L^{\varphi_n}{}_{fresnel}(r,\theta) = \sum_{n=-\infty}^{\infty} [L^{\varphi_n}{}_{fraun}(\theta) * \cos(\frac{-r}{2k\cos^2\theta} u^2)] \tag{5}$$

$$= [\sum_{n=-\infty}^{\infty} L^{\varphi_n}{}_{fraun}(\theta)] * \cos(\frac{-r}{2k\cos^2\theta} u^2)$$

$$= \frac{w}{\lambda}\cos\theta \bullet \sin c(wu) * \cos(\frac{-r}{2k\cos^2\theta} u^2)$$

(Here, $|u| \leq 1/\lambda$)

In equation (5), r represents a distance between the center of the linear transducer and a certain point. Since the $(w/\lambda)\cos\theta \bullet \text{sinc}(wu)$ term (which is called a first term hereinafter) is in accordance with a shape of a low-pass filter (LPF), the first term can be regarded as a LPF.

In addition, in the case of the $\cos(-ru^2/2k\cos^2\theta)$ term (which is called a second term hereinafter) in equation (5), the frequency range is varied according to a value of r in the limited range of u. That is, if the value of r becomes large, the range of u having a high frequency component becomes wide and the range of u having a low frequency component becomes small. Reversely, if the value of r becomes small, the range of u having high frequency component becomes small and the range of u having a low frequency component becomes large.

Thus, when the value of r becomes large, the portion representing a low frequency component in the second term is close to a pulse shape and the equation (5) becomes close to the first term. In this case, the first term in the equation (5) corresponds to the case where a plurality of limited plane waves have been superposed at a remote distance. That is, when a plurality of limited plane waves have been superposed at a remote distance, the superposed wave is expressed as the following equation (6) based on the Fraunhofer equation in the polar coordinate system and is the same as the first term in the equation (5).

$$\sum_{n=-\infty}^{\infty} L^{\varphi_n}{}_{fraun}(\theta) = \frac{w\cos\theta}{\lambda}\sin c(wu) \tag{6}$$

The first term in the equation (5) and the expression of the equation (6) have a respectively same spherical wave as in the case where a spherical wave is transmitted from a single element as shown in FIG. 2, when the value of r becomes large.

Meanwhile, when the value of r becomes small in the equation (5), the portion representing a low frequency component of the second term becomes wide and the equation (5) becomes closer to the second term.

FIG. 2 is a graphical view showing a concept for forming a spherical wave by superposition of a plurality of limited plane waves which have been formed as described above. As depicted, if a plurality of limited plane waves having a variety of steering angle with respect to the spherical wave transmitted from each element are superposed, a single spherical wave is formed as if a spherical wave had been transmitted from a single element.

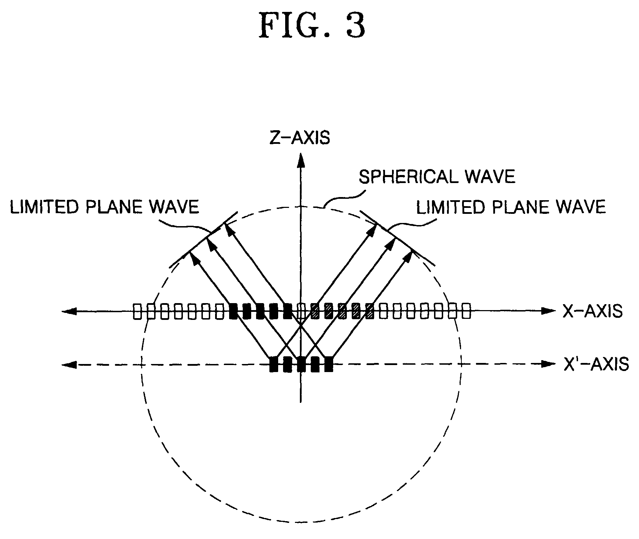

However, it can be seen from FIG. 2 that the center of the spherical wave by superposing the limited plane waves has been concentrated on a certain element on the x-axis. That is, such a phenomenon means that energy is conclusively concentrated on only a single element, and if the relative distribution of energy is considered, it is regarded that the spherical wave is transmitted to only a single element. Thus, in order to prevent the above energy concentration phenomenon, it is assumed that the center of the spherical wave by the superposition of the plurality of the limited plane waves does not exist on the x-axis where the respective elements are arranged, but exists behind the x-axis. That is, a virtual array, e. g. a virtual linear transducer which is located behind the actual linear transducer is introduced. Such an array is shown in FIG. 3.

FIG. 3 is a graphical view showing positions of a virtual linear transducer. In FIG. 3, the virtual linear transducer on the x'-axis does not actually exist. Accordingly, each element located on the x'-axis transmits a spherical wave having a respective time delay based on a delay pattern, to thereby form a plurality of limited plane waves. Then, the plurality of limited plane waves are superposed, to thereby form a single spherical wave. This is equivalent to the case that the plane wave equivalent to the limited plane wave by the virtual linear transducer is formed by the actual linear transducer existing on the x-axis and the plurality of the limited plane waves which have been formed as described above are superposed, to thereby form a spherical wave. That is, in the case of the actual linear transducer, if each element transmits the spherical wave having a respective time delay based on a predetermined delay pattern, a plurality of limited plane waves are formed and then the plurality of the limited plane waves are superposed, resulting in formation of a single spherical wave.

As a result, the center of the spherical wave by the superposition of the plurality of limited plane waves exists on the virtual linear transducer located on the x'-axis, and the respective elements on the actual linear transducer have a relatively uniform energy distribution.

As described above, the spherical wave formation method according to the present invention forms a large-sized single spherical wave, by using a variety of elements. Accordingly, the present invention can make the formed spherical wave travel to a remote distance and improve a ratio of signal to noise.

Also, the spherical wave formation method according to the present invention can be embodied by repetitively transmitting a wave to each element with a time difference, when a currently available linear transducer is linear time invariant (LTI).

**Claims**

1. A method for forming a large-sized spherical wave by using waves transmitted from a linear transducer, the spherical wave forming method comprising the steps of:

   (a) transmitting waves having a respective time delay from a plurality of elements in the linear transducer, based on a predetermined delay pattern;
   (b) forming a plurality of limited plane waves by using the plurality of waves having the respective time delay transmitted in step (a); and
   (c) superposing the plurality of limited plane waves formed in step (b) in order to form the large-sized spherical wave.

2. The spherical wave formation method according to claim 1, wherein said delay pattern plays a role of preventing the energy center of the spherical wave by the superposition of the plurality of limited plane waves from being concentrated on a certain single element among the plurality of elements.

3. The spherical wave formation method according to claim 1, wherein said plurality of the limited plane waves are a respective plane wave having a restricted length with respect to the same phase of the spherical waves transmitted from the respective elements.

4. The spherical wave formation method according to claim 1, wherein the wave obtained by superposing the plurality of limited plane waves at a remote distance, is expressed as the following equation based on the Fraunhofer equation on the polar coordinate system,

$$\sum_{n=-\infty}^{\infty} L^{\varphi_n}{}_{fraun}(\theta) = \frac{w\cos\theta}{\lambda}\sin c(wu)$$

in which, $L^{\varphi}{}_{fraun}(\theta)$ is the Fraunhofer approximation equation on the polar coordinate system, u is equal to $\sin\theta/\lambda$, w is the width of the element, and $\varphi$ is a steering angle of the limited plane wave.

5. The spherical wave formation method according to claim 1, wherein the wave obtained by superposing the plurality of limited plane waves at a close distance is expressed as the following equation, in which case if the value of r becomes large, a waveform approximating to $(w\cos\theta/\lambda)\mathrm{sinc}(wu)$ is obtained to thereby form a spherical wave as if a single element transmits a spherical wave,

$$\sum_{n=-\infty}^{\infty} L^{\varphi_n}{}_{fresnel}(r,\theta) = \frac{w\cos\theta}{\lambda}\sin c(wu) * \cos(\frac{-r}{2k\cos^2\theta}u^2)$$

in which r is a distance from the center of the linear transducer to a certain point, $k(=2\pi/\lambda)$ is the wave number, u is equal to $\sin\theta/\lambda$, w is the width of the element, and $\varphi$ is a steering angle of the limited plane wave.

6. The spherical wave formation method according to claim 1, wherein the height of said each element is much larger than the width of the element.

7. The spherical wave formation method according to claim 1, wherein said spherical wave can be embodied by repetitively transmitting a wave to each element with a time difference when the linear transducer is linear time invariant.

# FIG. 1(PRIOR ART)

Z-AXIS

LIMITED PLANE WAVE

STEERING ANGLE

X-AXIS

# FIG. 2

ENERGY
CONCENTRATION POINT

Z-AXIS

SPHERICAL WAVE

X-AXIS

# FIG. 3

Z-AXIS

SPHERICAL WAVE

LIMITED PLANE WAVE

LIMITED PLANE WAVE

X-AXIS

X'-AXIS

EP 0 986 128 A1

European Patent Office

**EUROPEAN SEARCH REPORT**

Application Number

EP 99 11 7352

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 004, no. 188 (P-042), 24 December 1980 & JP 55 129776 A (YOKOGAWA HOKUSHIN ELECTRIC CORP), 7 October 1980 * abstract * | 1-7 | H01Q1/00 |
| A | US 4 591 241 A (HUIGNARD JEAN-PIERRE) 27 May 1986 * column 3, line 9 - column 4, line 30; figure 2 * * column 3, line 9 - column 4, line 30; figure 2 * | 1-7 | |
| A | US 4 948 253 A (BIEGEN JAMES F) 14 August 1990 * column 4, line 22 - column 6, line 13; figures 1,2 * | 1-7 | |
| | | | TECHNICAL FIELDS SEARCHED (Int.Cl.7) |
| | | | H01Q |

The present search report has been drawn up for all claims

| Place of search | Date of completion of the search | Examiner |
|---|---|---|
| MUNICH | 3 December 1999 | VILLAFUERTE ABR.., L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 11 7352

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-1999

| Patent document cited in search report | | Publication date | Patent family member(s) | | Publication date |
|---|---|---|---|---|---|
| US 4591241 | A | 27-05-1986 | FR | 2536175 A | 18-05-1984 |
| | | | DE | 3375217 A | 11-02-1988 |
| | | | EP | 0109886 A | 30-05-1984 |
| | | | JP | 6070656 B | 07-09-1994 |
| | | | JP | 59105527 A | 18-06-1984 |
| US 4948253 | A | 14-08-1990 | DE | 3936118 A | 03-05-1990 |
| | | | GB | 2224367 A,B | 02-05-1990 |
| | | | JP | 2243910 A | 28-09-1990 |

EPO FORM P0459

For more details about this annex : see Official Journal of the European Patent Office, No. 12/82